# EUROPEAN PATENT SPECIFICATION

(11) **EP 3 610 374 B1**
(45) Date of publication and mention of the grant of the patent: **04.11.2026**
(21) Application number: 17718756.4
(22) Date of filing: 13.04.2017
(51) Int. Cl.: G06F 9/50

(54) **METHOD AND RESOURCE MANAGER FOR SCHEDULING OF INSTANCES IN A DATA CENTRE**
VERFAHREN UND RESSOURCENMANAGER ZUR PLANUNG VON INSTANZEN IN EINEM DATENZENTRUM
PROCÉDÉ ET GESTIONNAIRE DE RESSOURCES POUR LA PLANIFICATION D'INSTANCES DANS UN CENTRE DE DONNÉES

(43) Date of publication of application: 19.02.2020
(73) Proprietor: Telefonaktiebolaget LM Ericsson (PUBL), 164 83 Stockholm (SE)
(72) Inventor: TURULL, Daniel, SE-169 32 Solna (SE); VIGOLVINO LOPES, Raquel, 58400-515, Prata, Campina Grande, PB (BR); CARVALHO, Marcus, 58033-370, Brisamar, Joao Pessoa - PB (BR); VILAR BRASILEIRO, Francisco, 58.428-79 Campina Grande - PB (BR); FARIAS, Giovanni, 58415-625 Cruzeiro Campina Grande - PB (BR)
(74) Representative: Ericsson
(86) International application number: PCT/SE2017/050375
(87) International publication number: WO 2018/190758

(56) References cited:
- EP-A1- 2 568 383
- US-A1- 2008 320 482
- US-A1- 2012 144 389
- US-A1- 2012 221 733
- US-B1- 8 396 807
- US-B1- 9 244 705
- US-B2- 9 405 587
- YING SONG ET AL: "A Two-Tiered On-Demand Resource Allocation Mechanism for VM-Based Data Centers", IEEE TRANSACTIONS ON SERVICES COMPUTING, IEEE, USA, vol. 6, no. 1, 1 January 2013 (2013-01-01), pages 116 - 129, XP011497574, ISSN: 1939-1374, DOI: 10.1109/TSC.2011.41
- CARVALHO MARCUS ET AL: "Prediction-Based Admission Control for IaaS Clouds with Multiple Service Classes", 2015 IEEE 7TH INTERNATIONAL CONFERENCE ON CLOUD COMPUTING TECHNOLOGY AND SCIENCE (CLOUDCOM), IEEE, 30 November 2015 (2015-11-30), pages 82 - 90, XP032859055, [retrieved on 20160201], DOI: 10.1109/CLOUDCOM.2015.16
- ASYABI ESMAIL ET AL: "Kani: a QoS-aware hypervisor-level scheduler for cloud computing environments", CLUSTER COMPUTING, BALTZER SCIENCE PUBLISHERS, BUSSUM, NL, vol. 19, no. 2, 16 February 2016 (2016-02-16), pages 567 - 583, XP035904615, ISSN: 1386-7857, [retrieved on 20160216], DOI: 10.1007/S10586-016-0541-5
- GABRIEL MATEESCU ET AL: "Hybrid Computing—Where HPC meets grid and Cloud Computing", FUTURE GENERATION COMPUTER SYSTEMS, 1 January 2011 (2011-01-01), pages 440 - 453, XP055432265, Retrieved from the Internet <URL:https://www.usenix.org/system/files/conference/atc15/atc15-paper-karanasos.pdf> DOI: 10.1016/j.future.2010.11.003
- ABHISHEK VERMA ET AL: "Large-scale cluster management at Google with Borg", THE 2014 OTTAWA LINUX SYMPOSIUM (OLS '14), 1 January 2015 (2015-01-01), New York, New York, USA, pages 1 - 17, XP055431977, ISBN: 978-1-4503-3238-5, DOI: 10.1145/2741948.2741964
- ABHISHEK VERMA ET AL: "Large-scale cluster management at Google with Borg", THE 2014 OTTAWA LINUX SYMPOSIUM (OLS '14), 1 January 2015 (2015-01-01), New York, New York, USA, pages 1 - 17, XP055431977, ISBN: 978-1-4503-3238-5, DOI: 10.1145/2741948.2741964
- GABRIEL MATEESCU ET AL: "Hybrid Computing-Where HPC meets grid and Cloud Computing", FUTURE GENERATION COMPUTER SYSTEMS, 1 January 2011 (2011-01-01), pages 440 - 453, XP055432265, Retrieved from the Internet <URL:https://www.usenix.org/system/files/conference/atc15/atc15-paper-karanasos.pdf> DOI: 10.1016/j.future.2010.11.003

## Description

### TECHNICAL FIELD

This disclosure relates to scheduling of instances. More particularly, it relates to a method, a resource manager and a computer program for scheduling of instances in a data centre.

### BACKGROUND

Infrastructure-as-a-Service (laaS) is a cloud computing model that enables users to access computation resources when these are needed. The computation resources are typically bundled as virtual machines (VMs). Users then pay for what they use, instead of acquiring and maintaining their own hardware. A large variety of users, having different budgets and Quality of Service (QoS) requirements for applications, is migrating to this model.

Considering now an laaS cloud provider that owns a set of physical computation machines. Each computation machine has a certain capacity for each type of resource, such as central processing unit (CPU), memory and disk. The nominal cloud capacity is the total amount of resources aggregated over all computation machines owned by the provider. The available cloud capacity accounts only for computation machines that are available to users, and may vary over time, for instance due to computation machine failure.

The resources can be offered as combinations of capacities to be allocated for each resource type, for instance 2 CPU-cores, 8GB memory, and 32GB disk space, and can be bundled as VMs.

"Large-scale cluster management at Google with Borg" by Verma et al describes Google's Borg system which achieves high utilization by combining admission control, efficient task-packing, over-commitment, and machine sharing with process-level performance isolation. It supports high-availability applications with runtime features that minimize fault-recovery time. and scheduling policies that reduce the probability of correlated failures.

Carvalho, M., et al., proposes in "Prediction-based admission control for laaS clouds with multiple service classes" that a provider offers multiple classes, with potentially different pricing and expected QoS. Each class has a separate service level agreement (SLA), which is a contract that defines service level objectives (SLOs) that the provider promises to meet, and penalties that the provider pays in case an SLO is violated, that is, the promise is not fulfilled.

Further, in "Availability Knob: Flexible user-defined availability in the cloud" Proc. SoCC '16 Proceedings of the Seventh ACM Symposium on Cloud Computing Oct 2016, Hahrad, M. and Wentlaff, D. proposes a cloud model on which customers can express diverse availability SLOs to a cloud provider. It is further proposed techniques for scheduling based on machine failure probabilities, in order to meet availability SLOs and reduce provider's costs. A scheduler can migrate VMs to cheaper computation machines if their downtime fulfilment is not compromised. Deliberate downtimes can also be performed, pausing VMs that are above the downtime target by a safety margin. Extra capacity that is gained in this way can be offered for new computational resources.

Having introduced multiple classes for instances, where each class has a certain SLO requirement, it has not been described how to schedule instances efficiently without violating SLO fulfilment. This risks creating a high variance in SLO fulfilments. An average availability, being an example of a SLO, can be above its SLO requirement, with some resources fulfilling their SLO requirements and other resources fulfilling their SLO requirements too well. The capabilities are thus not used cost-efficiently, which can also reduce a SLO for other classes.

ASYABI ESMAIL et al discloses in "Kani: a QoS-aware hypervisor-level scheduler for cloud computing environments" a QoS-aware hypervisor-level scheduler which dynamically monitors the quality of delivered services to quantify the deviation between desired and delivered levels of QoS.

There is thus a demand for an improved solution circumventing or at least diminishing issues when scheduling instances belonging to different classes.

### SUMMARY

It is an object of exemplary embodiments herein to address at least some of the issues outlined above and to schedule instances in logical servers. This object and others are achieved by a resource manager that is capable of scheduling instances, a method and a computer program therefore, according to the appended independent claims, and by the exemplary embodiments according to the dependent claims.

According to an aspect, the exemplary embodiments provide a method for scheduling instances to be run in two or more logical servers of a data centre, where each instance belongs to a class of instances, where each class of instances is associated with a required service level objective. The method comprises receiving from the two or more logical servers of the data centre, current information about a SLO of the instances assigned to the two or more logical servers. The method comprises determining a margin between current information about said service level objective and the respective required service level objective of the instances assigned to the two or more logical servers. The method also comprises identifying one of said two or more logical servers, based on the determined margin between current information about said service level objective and the respective required service level objective. The method further comprises sorting the instances according to their determined margin, for at least one class of instances, among the instances assigned to said identified logical server. The method further comprises sending to the identified logical server an instruction to pre-empt the instance that has a margin that is larger than any other margin of the sorted instances. The method also comprises, among the sorted instances, determining for said at least one class of instances, the instance that has a margin that is smaller than any other margin of the sorted instances. Also, the method comprises determining whether resources available in the logical server are sufficient for the instance that has the margin that is smaller than any other margin of the sorted instances. In addition, the method comprises, when the resources available in the logical server are sufficient, sending to the logical server an instruction to allocate resources in the logical server for scheduling said instance that has the smallest margin. In addition, the method comprises when the resources available in the logical server are not sufficient for the instance that has the smallest margin, reiterating previous actions of sending an instruction to pre-empt the instance that has a margin that is larger than any other margin of the sorted instances, determining for said at least one class of instances, the instance that has a margin that is smaller than any other margin of the sorted instances, and determining whether resources available in the logical server are sufficient for the instance that has the margin that is smaller than any other margin of the sorted instances for enabling sending an instruction to allocate resources in the logical server for scheduling of the instance that has the smallest margin.

According to another aspect, the exemplary embodiments provide a resource manager that is capable of scheduling instances to be run in two or more logical servers of a data centre related to the resource manager. Each instance belongs to a class of instances, where each class of instances is associated with a required SLO. The resource manager is adapted to receive from the two or more logical servers of the data centre, current information about a SLO of the instances assigned to the two or more logical servers. The resource manager is adapted to determine a margin between current information about said SLO and the respective required SLO of the instances assigned to the two or more logical servers. The resource manager is adapted to identify one of said two or more logical servers, based on the determined margin between current information about said SLO and the respective required SLO. The resource manager is also adapted to sort the instances according to their determined margin, for at least one class of instances, among the instances assigned to said identified logical server, and to send to the identified logical server an instruction to pre-empt the instance that has a margin that is larger than any other margin of the sorted instances. The resource manager is also adapted to, among the sorted instances, determine for said at least one class of instances, the instance that has a margin that is smaller than any other margin of the sorted instances. The resource manager is further also adapted to determine whether resources available in the logical server are sufficient for the instance that has the margin that is smaller than any other margin of the sorted instances. In addition, the resource manager is adapted, when the resources available in the logical server are sufficient, to send to the logical server an instruction to allocate resources in the logical server for scheduling said instance that has the smallest margin. The resource manager is adapted, when the resources available in the logical server are not sufficient for the instance that has the smallest margin, to be adapted to send to the logical server an instruction to pre-empt, to determine the instance having the smallest margin, and to whether available resources for the instance having the smallest margin are sufficient, in order to send an instruction to allocate resources in the logical server for scheduling of the instance that has the smallest margin.

According to further aspects, the object is also achieved by a computer program and a computer program product comprising a computer-readable storage medium whereon the computer program is stored.

Examples and embodiments as described have one or more of the following advantages and preferable features:
It is advantageous that an overall SLO fulfilment is increased while keeping the SLO of more instances above their required SLO.
It is advantageous that resource capacity utilization is increased when adding more instances to one or more logical servers.
It is an advantage that required SLOs are met without increasing the capacity of the resources.

### BRIEF DESCRIPTION OF THE DRAWINGS

Embodiments will now be described in more detail, and with reference to the accompanying drawings, in which:
- Figure 1 schematically illustrates a handshake diagram between a resource manager and a logical server related to the embodiments of the present disclosure;
- Figure 2 schematically presents actions of a method for scheduling instances to be run in two or more logical servers, according to the invention;
- Figure 3 schematically presents a resource manager, according to embodiments of the present disclosure;
- Figure 4 schematically presents a logical server related to embodiments of the present disclosure; and
- Figure 5 schematically presents an agent related to embodiments of the present disclosure.

### DETAILED DESCRIPTION

In the following description, exemplary embodiments will be described in more detail, with reference to accompanying drawings. For the purpose of explanation and not limitation, specific details are set forth, such as particular examples and techniques in order to provide a thorough understanding.

The following disclosure enables pre-empting instances belonging to various classes of instances, based on service level objectives (SLOs).

One example of a SLO metric is the availability of the instance, defined as the percentage of time the instance was running, since its request submission until its release or pause.

When the method herein is performed, it is determined the current SLOs of instances belonging to a class. If the current SLO of a first instance is further away from the SLO requirement defied by the class of the first instance, than the difference between the current SLO and the SLO requirement of any other instance, belonging to any class, said first instance is pre-emptied. The first instance is placed in waiting queue, which waiting queue comprises instances, which have been pre-emptied and wait for resources to be allocated to them.

A difference between a current SLO and a SLO requirement irrespective of the class to which the instance belongs is thus determined. This difference is used when deciding which instance to allocate resources for, and which instance to pre-empt, while still fulfilling the SLO requirement for each instance.

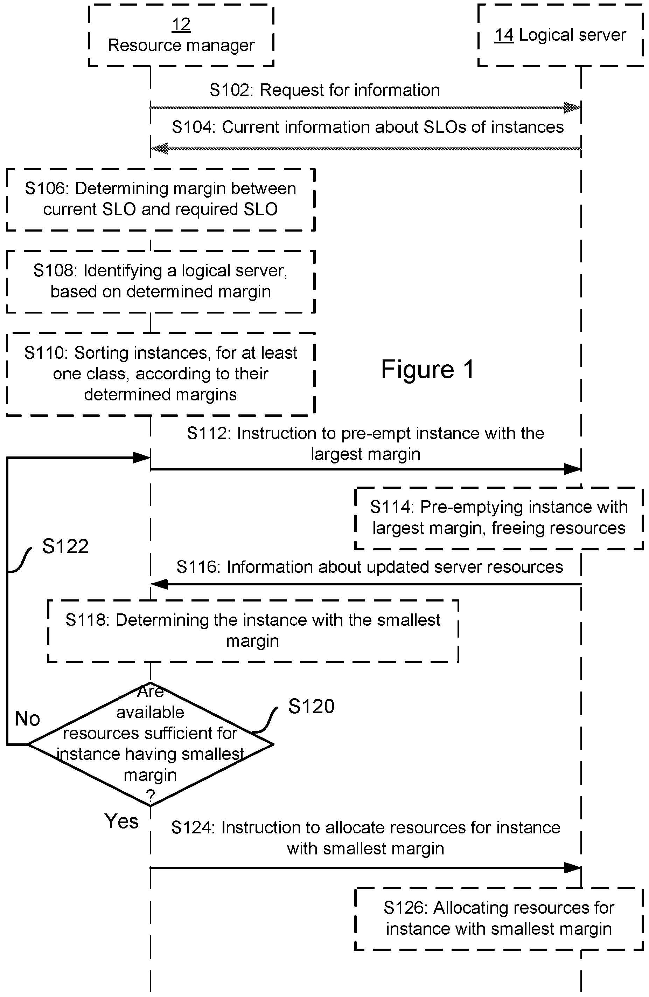

Figure 1 schematically presents a handshake diagram between a resource manager 12 and a logical server 14 related to the embodiments of the present disclosure, for scheduling of instances in one or more logical servers of a data centre. Each instance belongs to a class of instances, where each class of instances is associated with a required service level objective, SLO.

A SLO of an instance may comprise any one of: availability of the instance, time run since the instance was last executed, time until the availability will be below a threshold, and use of processor cycles of the instance.

In action S102 of the handshake diagram, the resource manager 12 sends to the logical server 14 a request for current information about a SLO of the instances which are assigned to the logical server.

In action S104, the current information about the SLO of the instances is received by the resource manager 12, from the logical server 14.

In action S106, the resource manager 12 determines a difference in the form of a margin between current information of the SLO and the required SLO defined by the class of the instances assigned to two or more logical servers.

In action S108 the resource manager identifies a logical server of two or more logical servers based on the determined margins. Herein, it is determined which logical server of the two or more logical servers, which has more available resources, which available resources are preferably suitable for carrying out the instances.

In action S110 the resource manager sorts the instances, for at least one class, according to their determined respective margin. Sorting may alternatively be performed for two or more classes. Sorting of instances may thus result in a list of instances which have a relatively small margin in one end and a larger margin in another end, opposite to said one end. Instances within the list may thus have a margin that increases or decreases when moving along the list of instances.

In action S112, the resource manager sends an instruction to the logical server 14 to pre-empt the instance having the largest margin, between its current SLO and its required SLO.

In action S114, the logical server 14 pre-empts an instance that has a margin that is larger than any other margin of other instances. Resources which are occupied by the said pre-emptied instance are hence freed and made available to other instances.

In action S116, the logical server 14 may send updated information about available resources of the identified logical server.

In action S118, the resource manager 12 determines an instance that has a margin that is smaller than any other margin of any instances assigned to the logical server 14.

In action S120, the resource manager 12 determines whether the available resources of the logical server are sufficient for the instance having the smallest margin.

Action S122 is performed when it is determined that the available resources of the logical server are not sufficient of the instance having the smallest margin. This action includes reiterating actions S112 - S120, such that the amount of available resources is increased. In the repeated action S112, the resource manager again sends an instruction to the logical server 14 to pre-empt an instance, for which resources are allocated by the logical server, and where said instance has a margin that is larger than any other margin of any instances of the logical server.

When it is determined in action S120 that the available resources in the logical server are sufficient for the instance that has a margin that is smaller than any other margin in the logical server, i.e. when inquiry in S120 is answered by "Yes", action S124 is performed.

In action S124 the resource manager 12 sends an instruction to the logical server to allocate resources for the instance that has a margin that is smaller than any other margin of any instance assigned to the logical server.

In action S126, the logical server allocates resources to the instance with the smallest margin, according to the instruction in action S124.

It is herein described that although instance may belong to various classes and thus have different required SLOs, it is disclosed how to schedule these instances in an efficient manner such that more instances will reach SLO fulfilment.

Whether to allocate or pre-empt an instance may hence be based on the margin between a current SLO and a required SLO of the respective instance, in relation to the margin of other instances assigned to the logical server.

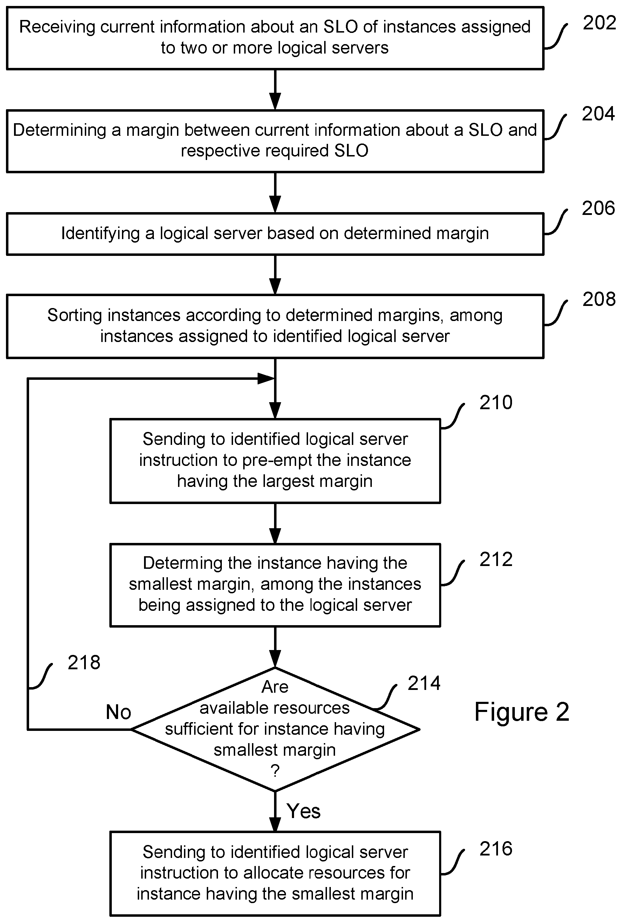

Figure 2 presents actions of a method for scheduling instances to be run in two or more logical servers of a data centre, according to the invention. Each instance belongs to a class of instances, where each class of instances is associated with a required SLO. It is hence illustrated in Figure 2:
Action 202: Receiving from the two or more logical servers of the data centre, current information about a SLO of the instances assigned to the two or more logical servers.
Action 204: Determining a margin between current information about said SLO and the respective required SLO of the instances assigned to the two or more logical servers. The required SLO may further comprise a safety offset SLO, whereby the margin between the current information and the required SLO, will become smaller by a safety offset. As will be described down below, an instance with a smaller margin will be given a higher priority risk of violation of the respective minimum SLO is decreased.

The SLO of an instance may comprise a time duration lapsed since last time resources were allocated for said instance or since last time the instance was executed in the logical server.

The SLO of an instance may comprise an availability of the instance. The availability may be defined as the time total time during which the instance has been running divided by the difference between the time at which the instance stopped and the time the instance started. Alternatively, the availability may be defined as the total time during which the instance has been running divided by the current time, if presently running, minus the time at which the instance was submitted to the resource manager for execution.

The SLO of an instance may also comprise the use of processor cycles.

Action 206: Identifying one of said two or more logical servers, based on the determined margin between current information about said SLO and the respective required SLO.

Action 208: Sorting the instances according to their determined margin, for at least one class of instances, among the instances assigned to the identified logical server. Sorting may also comprise sorting of instances that belong to a superior class and an inferior class of instances,

Action 210: Sending to the identified logical server an instruction to pre-empt the instance that has a margin that is larger than any other margin of the sorted instances. Sending 210 the instruction to pre-empt the instance may comprise sending an instruction to pre-empt an instance for which the logical server has allocated resources. Sending 210 the instruction to pre-empt the instance that has a margin that is larger than any other margin of the sorted instances may further comprise placing said instance in a queue of instance requests waiting for resource allocation.

The SLO of an instance may alternatively comprise a time duration, at the end of which a pre-emptied instance will not meet its required SLO.

Sending 210 the instruction may further comprise sending an instruction to pre-empt an instance belonging to the superior class, when the instance that has a margin that is larger than any other margin of the sorted instances belongs to the superior class.

Action 212: Among the sorted instances, determining for said at least one class of instances, the instance that has a margin that is smaller than any other margin of the sorted instances.

Action 214: Determining whether resources available in the logical server are sufficient for the instance that has the margin that is smaller than any other margin of the sorted instances. The resources available in the identified logical server typically comprise resources other than resources already allocated to instances in the identified logical server.

Also, Action 216: Sending to the logical server an instruction to allocate resources in the logical server for scheduling said instance that has the smallest margin, when the resources available in the logical server are sufficient.

Alternatively, action 218: Reiterating previous actions of sending 210, determining 212, and determining 214 for enabling sending 216 an instruction to allocate resources in the logical server for scheduling of the instance that has the smallest margin, when the resources available in the logical server are not sufficient for the instance that has the smallest margin.

Each class defines the required, as described above. However, more than one SLO may be relevant for the class, for which reason each class may have a separate required SLO value for each SLO, or SLO type. One example of a SLO type is the total time an instance has been running, and another SLO type is the availability. These do not have to be totally independent of, or orthogonal to, each other.

Action 204 may thus comprise determining a margin for each SLO type. Action 208 may then comprise sorting according to primarily a first SLO type and secondarily a second SLO type. That is, if two instances are calculated to have one and the same first margin for a first SLO, the second margin can be considered and sorting among said two instances can be performed according to said second margin. For this reason, the determination of which instance to pre-empt and which instance to allocate resources for in the logical server may be based on two types of SLOs, in needed. The user may for this purpose specify a priority order, defining which SLO type to be primarily sorted according to, and which SLO type to be secondarily sorted according to.

The actions of the method may be triggered by any one of: a receipt of a request for scheduling of an instance belonging to a class of instances, a receipt of information that an instance assigned to one of said two or more logical servers is released, i.e. stopped running, a periodical trigger, or that at least a required SLO of a pre-empted instance is about to be violated.

The method may also comprise sending to the two or more logical servers of the data centre, a request for current information about a SLO of instances assigned to the two or more logical servers, prior to receiving from the two or more logical servers of the data centre, current information about the SLO of the instances assigned to the two or more logical servers.

Within these actions of the method, the instances may comprise one or more of: virtual machines, VMs, containers, and processes to be executed in a logical server.

The method may also be triggered when a current SLO of an instance placed in a waiting queue passes a further SLO level, for instance a factor, for example 1,5, multiplied by the required SLO.

Instances being assigned to logical server may thus be sorted according to their margin calculated as the difference between a current SLO and a required SLO.

For instance, if the SLO comprises time since last run, a margin may be calculated as the maximum time since last run minus the time since the last actual run. Instances can then be sorted according to this margin. An instance having a margin that is larger than any other margin of any instances assigned to the logical server, may thus be selected for pre-emption. Similarly, an instance having a margin that is smaller than any other margin of any instances assigned to the logical server, may thus be allocated resources, in order to minimize the risk of violating the SLO, i.e. having the current SLO passing the required SLO.

If the SLO comprises the use of processor cycles, a required SLO may comprise a required number of processor cycles per time unit. A margin may then be calculated as the actual number of processor cycles used minus the required number of processor cycles per time unit. Instances may then be sorted according to this calculated margin.

Alternatively, if the SLO of an instance comprise a time duration at the end of which the SLO is not fulfilled, a required SLO typically comprises a certain time duration, and a current SLO a shorter time duration, for which reason a margin may be calculated as the required time duration minus the shorter time duration, thus revealing a margin being the difference between the time durations. An instance having a margin that is larger, or longer, than any other margin of other instances assigned to the logical server, may be selected for pre-emption.

The SLO of an instance may also be the availability, as defined as the total time the instance has been running, or allocated resources, divided by the time length from the instance was submitted to the resource manager until the time it was released or stopped. If a required availability is 80% and a current availability is 90%, the availability margin is thus 10%. This percentage may then be compared with the corresponding margin for other instances, and sorted according to their respective margin. The instance having the largest margin may then be selected for pre-emption. Resources made available in this way may then be used for a different instance having a small, or even no, margin for avoiding violation of the SLO of this particular instance.

An example will now be described in which a logical server is capable of handling instances of three difference classes. It is herein assumed that instances belonging to these different classes have the same resource requirements. Instances belonging to various classes may well require different amounts of resources, but in this example, it is assumed that the requirements are equal. The logical server has a capacity to execute 4 instances at the same time.

**Table 1. Instance classes and their required availability**

| **Class** | **Required availability** |
|---|---|
| Production | 100% |
| Batch | 80% |
| Best-effort | 50% |

Further it is herein also assumed that the logical server has been running for a while, let us say time = 10. It is now time 10.

**Table 2. Instances with their classes and their running time and time when submitted time**

| **Instance** | **Class** | Total time which the instance has been running | Time when submitted to resource manager |
|---|---|---|---|
| Production 1 | Production | 10 | 0 |
| Batch 1 | Batch | 10 | 0 |
| Batch 2 | Batch | 9 | 0 |
| Best-effort 1 | Best-effort | 5 | 0 |

From Table 2 the current availability can be calculated for each respective instance.

For production 1 instance: total running time / (current time - time when submitted) = 10/ (10-0) = 1, i.e. 100%.
For instance Batch 1: 10/(10-0) = 100%
For instance Batch 2: 9/(10-0) = 0,9 = 90%
For instance Best-effort 1: 5/(10-0) = 0,5 = 50%

If the resource manager then receives a request for 2 further instances belonging to the Batch class. Since this event is one example of the triggering events the method is executed. Since the logical server only has resources sufficient for 4 instances, the method is performed.

For each instance a margin is calculated as the required availability minus the current availability.
Margin for instance production: 100% - 100% = 0%
Margin for instance Batch 1: 100% - 80% = 20%
Margin for instance Batch 2: 90% - 80% = 10%
Margin for instance Best-effort 1: 50% - 50% = 0%
These instances are sorted according to their margins. The instance having the largest margin is Batch 1. Thus Batch 1 is pre-emptied at time 10.

**Table 3. Instances being allocated resources by the logical server at time 10, with the first (Batch 3) of the two instances belonging to Batch class.**

| **Instance** | **Class** | Total time which the instance has been running | Time when submitted to resource manager |
|---|---|---|---|
| Production 1 | Production | 10 | 0 |
| Batch 2 | Batch | 9 | 0 |
| Batch 3 | Batch | 0 | 10 |
| Best-effort 1 | Best-effort | 5 | 0 |

**Table 4. Waiting queue of instances being pre-emptied and waiting for resources to be allocated to the instance.**

| **Instance** | **Class** | Total time which the instance has been running | Time when submitted to resource manager |
|---|---|---|---|
| Batch 1 | Batch | 10 | 0 |

In order to determine how to schedule instances to enable Batch 4, being the second of the two new instances, to be allocated resources. For each instance a margin is again calculated as the required availability minus the current availability.
Margin for instance production: 100% - 100% = 0%
Margin for instance Batch 2: 90% - 80% = 10%
Margin for instance Best-effort 1: 50% - 50% = 0%

Thus the instance with a margin that is larger than any other margin of any instance assigned to the logical server, is thus Batch 2, having a margin of 10%. Batch 2 is then pre-emptied and Batch 4 being allocated resources.

Instances being allocated resources by the logical server at time 10, with the first (Batch 3) of the two instances belonging to Batch class.

**Table 5. Instances being allocated resources by the logical server at time 10, with Batch 3 and Batch 4 corresponding to the first and second new instances to which resources are being allocated.**

| **Instance** | **Class** | Total time which the instance has been running | Time when submitted to resource manager |
|---|---|---|---|
| Production 1 | Production | 10 | 0 |
| Batch 3 | Batch | 0 | 10 |
| Batch 4 | Batch | 0 | 10 |
| Best-effort 1 | Best-effort | 5 | 0 |

**Table 6. Waiting queue of instances being pre-emptied and waiting for resources to be allocated to the instance at time t = 10.**

| **Instance** | **Class** | Total time which the instance has been running | Time when submitted to resource manager |
|---|---|---|---|
| Batch 1 | Batch | 10 | 0 |
| Batch 2 | Batch | 9 | 0 |

Thus, the resource manager has now instances Production 1, Batch 3, Batch 4 and Best - effort 1 as the 4 instances to which resources are allocated. Batch 1 and Batch 2 are pre-emptied, but they are still assigned to the logical server.

Moreover, the present disclosure also comprises computer program that is configured, when run on a computer, to perform the actions of the method for scheduling instances to be run in one or more logical servers of a data centre, as described above.

Also, the present disclosure comprises a computer program product that comprises a computer-readable storage medium and the computer program, as above, wherein the computer program is stored on the computer readable storage medium.

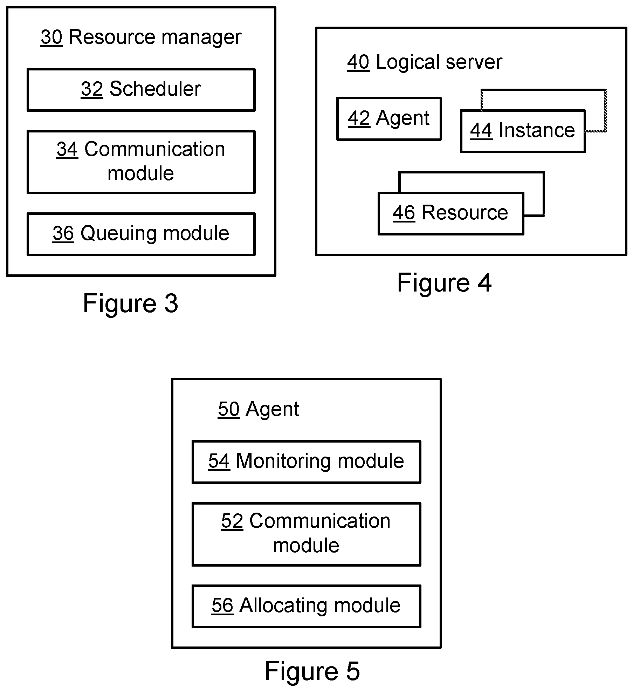

Figure 3 schematically presents a resource manager, according embodiments of the present disclosure. The resource manager is capable of scheduling instances to be run in two or more logical servers of a data centre related to the resource manager. Each instance belongs to a class of instances, where each class of instances is associated with a required SLO. The resource manager comprises a scheduler 32, and a communication module 34 that is connected to the scheduler 32. The communication module is adapted to receive, from the two or more logical servers of the data centre, current information about said SLO of the instances assigned to the two or more logical servers. The scheduler 32 is adapted to determine a margin between the current information about said SLO and the respective required SLO of the instances being assigned to the two or more logical servers. The scheduler 32 is also adapted to identify one of said two or more logical servers, based on the determined margin between current information about said SLO and the respective required SLO. In addition, the scheduler 32 is adapted to sort the instances according to their determined margin, for at least one class of instances, among the instances assigned to said identified logical server. Further, the communication module 34 is adapted to send to the identified logical server an instruction to pre-empt the instance that has a margin that is larger than any other margin of the sorted instances. The scheduler 32 is adapted to determine for said at least one class of instances, among the sorted instances, the instance that has a margin that is smaller than any other margin of the sorted instances, and to determine whether resources available in the logical server are sufficient for the instance that has the margin that is smaller than any other margin of the sorted instances. The communication module 34 is in addition also adapted to send to the logical server an instruction to allocate resources in the logical server for scheduling said instance that has a margin that is smaller than any other margin of the sorted instances, when the resources available in the logical server are sufficient.

When the resources available in the logical server are not sufficient, the communication module 34 is also adapted to send to the logical server an instruction to pre-empt an instance, and the scheduler 32 is then also adapted to determine for said at least one class of instances, the instance having the smallest margin in said at least one class, and to determine whether resources available in the logical server are sufficient for the instance having the smallest margin, to enable sending an instruction to allocate resources in the logical server for scheduling said instance having the smallest margin.

The resource manager 30 may also comprise queuing module 36 adapted to maintain pre-empted instances waiting to be allocated resources in the logical server.

The present disclosure also comprises a system that is capable of scheduling instances. Reference is also made to Figures 4 and 5 schematically presenting a logical server and an agent related to embodiments of the present disclosure.

One example of a system comprises the resource manager 30 of Figure 3, one or more logical servers 40, where each logical server comprises an agent 42, 50. The resource manager 30 can receive requests for scheduling of new instances, which instances are to be executed by said one or more logical servers 40. The resource manager 30 comprises a scheduler 32, a communication module 34 and may also comprise a queuing module 36.

Each logical server 40 comprises an agent 42, one or more instances 44 and resources 46.

The agent 50 comprises a monitoring module 54, a communication module 52 and an allocating module 56.

Each agent 50 communicates with the resource manager 30, and one or more processors, one or more memory resources and/or other types of resources 46 of the logical server 40. The resource manager 30 comprises a scheduler 32 that is adapted to execute the method as disclosed in this application, a queuing module 36 that is adapted to maintain instances that are pre-empted in a waiting queue, and a communication module 34 that is adapted to interact with the agents in the logical server 40.

The monitoring module 54 of the agent is adapted to monitor the available resources in the logical server 40. The allocating module 56 is adapted to allocate resources 46 in the logical server 40.

The instances typically run inside the logical server 40 and use their resources 46. A logical server 40 is typically a group of resources that can run instances. An example of a logical server is a physical server, whereas another example is a system composed of disaggregated hardware.

As earlier described each instance belongs to a class of instances. Each instance has further typically associated to it information about the time duration, that is a total time that, the instance has been running, the time of submission, that is the time at which the resource manager received a request for scheduling the instance in question. Also each instance has associated to it the amount of resources needed to execute the instance in question.

The agent is adapted to collect information about the logical server and to be able to provide required information to the resource manager. The agent therefore has information about the available resources in the logical server. These resources typically comprise the number of CPU being available, the amount of memory space, as well as the disk space. In addition, the agent keeps track of the number of instances allocated to the logical server.

Updated information about the available resources and the number of instances allocated to the logical server is thus communicated to the resource manager, such that scheduling can be adequately performed.

Although scheduling is controlled by the resource manager, hence managing the resources, the actual allocation of the resources may be performed by the allocating module 56 of the agent 50 within each logical server 40.

As described above each instance belongs to a class. Each class has various required SLOs. The actual required SLOs are decided by the user upon deciding which class each instance shall belong to. A user typically prefers a continuous production without any stand stills or interruptions, for which reason a production instance is placed in a class having a required SLO that guarantees the instance to be executed 100% of the time.

For another instance, for example a batch instance, it may be enough with a warranty guaranteeing the instance to be executed 80% of the time. It is thus the user deciding the class of the instance, and thereby also the usage of the resources of the logical server.

The present disclosure also comprises a resource manager that is capable of scheduling instances to be run in two or more logical servers of a data centre related to the resource manager. Each instance belongs to a class of instances, where each class of instances is associated with a required SLO. The resource manager is adapted to receive from the two or more logical servers of the data centre, current information about a SLO of the instances assigned to the two or more logical servers. The resource manager is adapted to determine a margin between current information about said SLO and the respective required SLO of the instances assigned to the two or more logical servers. The resource manager is adapted to identify one of said two or more logical servers, based on the determined margin between current information about said SLO and the respective required SLO. The resource manager is also adapted to sort the instances according to their determined margin, for at least one class of instances, among the instances assigned to said identified logical server, and to send to the identified logical server an instruction to pre-empt the instance that has a margin that is larger than any other margin of the sorted instances. The resource manager is also adapted to, among the sorted instances, determine for said at least one class of instances, the instance that has a margin that is smaller than any other margin of the sorted instances. The resource manager is further also adapted to determine whether resources available in the logical server are sufficient for the instance that has the margin that is smaller than any other margin of the sorted instances. In addition, the resource manager is adapted, when the resources available in the logical server are sufficient, to send to the logical server an instruction to allocate resources in the logical server for scheduling said instance that has the smallest margin. The resource manager is adapted, when the resources available in the logical server are not sufficient for the instance that has the smallest margin, to be adapted to send to the logical server an instruction to pre-empt, to determine the instance having the smallest margin, and to whether available resources for the instance having the smallest margin are sufficient, in order to send an instruction to allocate resources in the logical server for scheduling of the instance that has the smallest margin.

Examples and embodiments as described herein have one or more of the following advantages and preferable features:
It is advantageous that an overall SLO fulfilment is increased while keeping the SLO of more instances above their required SLO.
It is advantageous that resource capacity utilization is increased when adding more instances to one or more logical servers.
It is an advantage that required SLOs are met without the need to increase the capacity of the resources.

It may be further noted that the above described embodiments are only given as examples and should not be limiting to the present exemplary embodiments, since other solutions, uses, objectives, and functions are apparent within the scope of the embodiments as claimed in the accompanying patent claims.

### ABBREVIATIONS

- CPU: central processing unit
- IaaS: infrastructure-as-a-service
- QoS: quality of service
- SLA: service level agreement
- SLO: service level object
- VM: virtual machine

## Claims

1. A method for scheduling instances to be run in two or more logical servers of a data centre, where each instance belongs to a class of instances, where each class of instances is associated with a required service level objective, SLO, the method comprising:
- receiving (S104, 202), from the two or more logical servers of the data centre, current information about a SLO of instances assigned to the two or more logical servers;
- determining (S106, 204), for each instance of the instances assigned to the two or more logical servers, a margin between the current information about said SLO and the respective required SLO;
- identifying (S108, 206) one of said two or more logical servers based on the determined margins of the instances assigned to the two or more logical servers;
- sorting (S110, 208), for at least one class of instances, the instances assigned to said identified logical server according to the determined margins;
- sending (S112, 210), to the identified logical server, an instruction to pre-empt an instance that has a margin that is larger than any other margin of the sorted instances; and then,
- among the sorted instances, determining (S118, 212) for said at least one class of instances, the instance that has a margin that is smaller than any other margin of the sorted instances;
- determining (S120, 214) whether resources available in the identified logical server are sufficient for the instance that has the margin that is smaller than any other margin of the sorted instances; and
- when the resources available in the identified logical server are sufficient:
- sending (S124, 216), to the identified logical server, an instruction to allocate resources in the identified logical server for scheduling said instance that has the margin that is smaller than any other margin of the sorted instances; or
- when the resources available in the identified logical server are not sufficient for the instance that has the margin that is smaller than any other margin of the sorted instances:
- reiterating (S122, 218) previous actions of sending (S112, 210), determining (S118, 212), and determining (S120, 214) for enabling sending (S124, 216) an instruction to allocate resources in the identified logical server for scheduling of the instance that has the margin that is smaller than any other margin of the sorted instances.

2. The method according to claim 1, wherein sending (S112, 210) the instruction to pre-empt the instance comprises sending an instruction to pre-empt an instance for which the logical server has allocated resources.

3. The method according to claim 1 or 2, wherein sending (S112, 210) the instruction to pre-empt the instance that has a margin that is larger than any other margin of the sorted instances, further comprises placing said instance in a queue of instance requests waiting for resource allocation.

4. The method according to any one of claims 1 to 3, wherein the resources available in the identified logical server comprises resources other than the resources which already been allocated to instances in the identified logical server.

5. The method according to any one of claims 1 to 4, wherein sorting (S110, 208) also comprises sorting of instances belonging to a superior class and an inferior class of instances, where the sorting is performed according to the determined margin of the instances, and wherein sending (S112, 210) the instruction further comprises sending an instruction to pre-empt an instance belonging to the superior class when the instance that has a margin that is larger than any other margin of the sorted instances, belongs to the superior class.

6. The method according to any one of claims 1 to 5, wherein the respective required SLO further comprises a safety offset SLO, whereby the risk of violation of the respective required SLO is decreased.

7. The method according to any one of claims 1 to 6, wherein the SLO of an instance comprises a time duration since last time resources were allocated for said instance.

8. The method according to any one of claims 1 to 6, wherein the SLO of an instance comprises a time duration, at the end of which the instance will not fulfil the SLO.

9. The method according to any one of claims 1 to 6, wherein the SLO of an instance comprises an availability of the instance.

10. The method according to claim 9, wherein the availability of the instance comprises the duration during which the instance has been running in the logical server divided by the difference between the current time, if still running, or the time at which the instance was released, and the time at which a request for scheduling thereof was received by a scheduler.

11. The method according to any one of claims 1 to 6, wherein the SLO of an instance comprises use of processor cycles.

12. The method according to any one of claims 1 to 11, where the method is triggered by any one of: a receipt of a request for scheduling of an instance belonging to a class of instances, a receipt of information that an instance assigned to one of said two or more logical servers is released, a periodical trigger, or that at least a required SLO of a pre-empted instance is about to be violated.

13. The method according to any one of claims 1 to 12, further comprising sending (S102) to the two or more logical servers of the data centre, a request for current information about said SLO of instances assigned to the two or more logical servers.

14. The method according to any one of claims 1 to 13, where instances comprise one or more of: virtual machines, VMs, containers, and processes.

15. A computer program configured, when run on a computer, to perform the method of any of the preceding claims.

16. A computer program product comprising a computer-readable storage medium and the computer program according to claim 15, wherein the computer program is stored on the computer readable storage medium.

17. A resource manager (30) capable of scheduling instances to be run in two or more logical servers of a data centre related to the resource manager, where each instance belongs to a class of instances, where each class of instances is associated with a required service level objective, SLO, the resource manager comprising:
- a scheduler (32), and
- a communication module (34) connected to the scheduler, where the communication module is adapted to receive, from the two or more logical servers of the data centre, current information about said SLO of the instances assigned to the two or more logical servers;
where the scheduler (32) is adapted to determine, for each instance of the instances assigned to the two or more logical servers, a margin between the current information about said SLO and the respective required; to identify one of said two or more logical servers, based on the determined margins of the instances assigned to the two or more logical servers; to sort, for at least one class of instances, the instances assigned to said identified logical server according to the determined margins;
where the communication module (34) further is adapted to send, to the identified logical server, an instruction to pre-empt an instance that has a margin that is larger than any other margin of the sorted instances;
where the scheduler (32) also is adapted to then determine for said at least one class of instances, among the sorted instances, the instance that has a margin that is smaller than any other margin of the sorted instances; and to determine whether resources available in the identify logical server are sufficient for the instance that has the margin that is smaller than any other margin of the sorted instances;
where the communication module (34) in addition is adapted to send to the identified logical server an instruction to allocate resources in the identified logical server for scheduling said instance that has a margin that is smaller than any other margin of the sorted instances, when the resources available in the identified logical server are sufficient; and
when the resources available in the identified logical server are not sufficient, the communication module (34) being adapted to send to the logical server an instruction to pre-empt, and the scheduler (32) further being adapted to determine for said at least one class of instances, the instance having the margin that is smaller than any other margin of the sorted instances in said at least one class, and to determine whether resources available in the identified logical server are sufficient for the instance having the margin that is smaller than any other margin of the sorted instances, to enable to send an instruction to allocate resources in the identified logical server for scheduling said instance having the margin that is smaller than any other margin of the sorted instances.

## Patentansprüche

1. Verfahren zum Disponieren von Instanzen, die in zwei oder mehr logischen Servern eines Rechenzentrums ausgeführt werden sollen, wobei jede Instanz zu einer Klasse von Instanzen gehört, wobei jede Klasse von Instanzen mit einem geforderten Dienstgüteziel, SLO, assoziiert ist, wobei das Verfahren Folgendes umfasst:
- Empfangen (S104, 202) aktueller Informationen über ein SLO von Instanzen, die den zwei oder mehr logischen Servern zugeordnet sind, von den zwei oder mehr logischen Servern des Rechenzentrums;
- Bestimmen (S106, 204) eines Spielraums zwischen den aktuellen Informationen über das SLO und dem jeweiligen geforderten SLO für jede Instanz der den zwei oder mehr logischen Servern zugeordneten Instanzen;
- Identifizieren (S108, 206) eines der zwei oder mehr logischen Server basierend auf den bestimmten Spielräumen der den zwei oder mehr logischen Servern zugeordneten Instanzen;
- Sortieren (S110, 208) der dem identifizierten logischen Server zugeordneten Instanzen gemäß den bestimmten Spielräumen für mindestens eine Klasse von Instanzen;
- Senden (S112, 210) einer Anweisung zum Verdrängen einer Instanz, die einen Spielraum aufweist, der größer als jeder andere Spielraum der sortierten Instanzen ist, an den identifizierten logischen Server; und dann
- Bestimmen (S118, 212) unter den sortierten Instanzen der Instanz, die einen Spielraum aufweist, der kleiner als jeder andere Spielraum der sortierten Instanzen ist, für die mindestens eine Klasse von Instanzen;
- Bestimmen (S120, 214), ob Ressourcen, die in dem identifizierten logischen Server verfügbar sind, für die Instanz ausreichen, die den Spielraum aufweist, der kleiner als jeder andere Spielraum der sortierten Instanzen ist; und,
- wenn die in dem identifizierten logischen Server verfügbaren Ressourcen ausreichen:
- Senden (S124, 216) einer Anweisung zum Zuweisen von Ressourcen in dem identifizierten logischen Server zum Disponieren der Instanz, die den Spielraum aufweist, der größer als jeder andere Spielraum der sortierten Instanzen ist, an den identifizierten logischen Server; oder,
- wenn die in dem identifizierten logischen Server verfügbaren Ressourcen für die Instanz, die den Spielraum aufweist, der kleiner als jeder andere Spielraum der sortierten Instanzen ist, nicht ausreichen:
- Wiederholen (S122, 218) der vorherigen Aktionen des Sendens (S112, 210), Bestimmens (S118, 212) und Bestimmens (S120, 214) zum Ermöglichen des Sendens (S124, 216) einer Anweisung zum Zuweisen von Ressourcen in dem identifizierten logischen Server zum Disponieren der Instanz, die den Spielraum aufweist, der kleiner als jeder andere Spielraum der sortierten Instanzen ist.

2. Verfahren nach Anspruch 1, wobei das Senden (S112, 210) der Anweisung zum Verdrängen der Instanz Senden einer Anweisung zum Verdrängen einer Instanz umfasst, für die der logische Server Ressourcen zugewiesen hat.

3. Verfahren nach Anspruch 1 oder 2, wobei das Senden (S112, 210) der Anweisung zum Verdrängen der Instanz, die einen Spielraum aufweist, der größer als jeder andere Spielraum der sortierten Instanzen ist, ferner Platzieren der Instanz in einer Warteschlange von Instanzanforderungen umfasst, die auf Ressourcenzuweisung warten.

4. Verfahren nach einem der Ansprüche 1 bis 3, wobei die in dem identifizierten logischen Server verfügbaren Ressourcen andere Ressourcen umfassen als die Ressourcen, die bereits Instanzen in dem identifizierten logischen Server zugewiesen wurden.

5. Verfahren nach einem der Ansprüche 1 bis 4, wobei das Sortieren (S110, 208) außerdem Sortieren von Instanzen umfasst, die zu einer höheren Klasse und einer niedrigeren Klasse von Instanzen gehören, wobei das Sortieren gemäß dem bestimmten Spielraum der Instanzen durchgeführt wird, und wobei das Senden (S112, 210) der Anweisung ferner Senden einer Anweisung zum Verdrängen einer Instanz umfasst, die zu der höheren Klasse gehört, wenn die Instanz, die einen Spielraum aufweist, der größer als jeder andere Spielraum der sortierten Instanz ist, zu der höheren Klasse gehört.

6. Verfahren nach einem der Ansprüche 1 bis 5, wobei das jeweilige geforderte SLO ein Sicherheitsversatz-SLO umfasst, wodurch das Risiko einer Verletzung des jeweiligen geforderten SLO verringert wird.

7. Verfahren nach einem der Ansprüche 1 bis 6, wobei das SLO einer Instanz eine Zeitdauer umfasst, seit Ressourcen das letzte Mal für die Instanz zugewiesen wurden.

8. Verfahren nach einem der Ansprüche 1 bis 6, wobei das SLO einer Instanz eine Zeitdauer umfasst, nach deren Ende die Instanz das SLO nicht erfüllt.

9. Verfahren nach einem der Ansprüche 1 bis 6, wobei das SLO einer Instanz eine Verfügbarkeit der Instanz umfasst.

10. Verfahren nach Anspruch 9, wobei die Verfügbarkeit der Instanz die Dauer, während der die Instanz in dem logischen Server ausgeführt wurde, geteilt durch die Differenz zwischen der aktuellen Zeit, falls sie noch ausgeführt wird, oder der Zeit, in der die Instanz freigegeben wurde, und der Zeit umfasst, in der eine Anforderung zum Disponieren derselben durch einen Scheduler empfangen wurde,

11. Verfahren nach einem der Ansprüche 1 bis 6, wobei das SLO einer Instanz die Verwendung von Prozessorzyklen umfasst.

12. Verfahren nach einem der Ansprüche 1 bis 11, wobei das Verfahren durch eines von Folgenden ausgelöst wird: einen Empfang einer Anforderung zum Disponieren einer Instanz, die zu einer Klasse von Instanzen gehört, einen Empfang von Informationen, dass eine Instanz freigegeben wird, die einem der zwei oder mehr logischen Server zugeordnet ist, einen periodischen Auslöser oder, dass mindestens ein gefordertes SLO einer verdrängten Instanz voraussichtlich verletzt wird.

13. Verfahren nach einem der Ansprüche 1 bis 12, ferner umfassend Senden (S102) einer Anforderung für aktuelle Informationen über das SLO von Instanzen, die den zwei oder mehr logischen Servern zugeordnet sind, an die zwei oder mehr logischen Server des Rechenzentrums.

14. Verfahren nach einem der Ansprüche 1 bis 13, wobei Instanzen eines oder mehre von Folgenden umfassen: virtuelle Maschinen, VMs, Container und Prozesse.

15. Computerprogramm, das so konfiguriert ist, dass es bei Ausführung auf einem Computer das Verfahren nach einem der vorhergehenden Ansprüche durchführt.

16. Computerprogrammprodukt, umfassend ein computerlesbares Speichermedium und das Computerprogramm nach Anspruch 15, wobei das Computerprogramm auf dem computerlesbaren Speichermedium gespeichert ist.

17. Ressourcenmanager (30), der zum Disponieren von Instanzen in der Lage ist, die in zwei oder mehr logischen Servern eines mit dem Ressourcenmanager in Beziehung stehenden Rechenzentrums ausgeführt werden sollen, wobei jede Instanz zu einer Klasse von Instanzen gehört, wobei jede Klasse von Instanzen mit einem geforderten Dienstgüteziel, SLO, assoziiert ist, wobei der Ressourcenmanager Folgendes umfasst:
- einen Scheduler (32), und
- ein Kommunikationsmodul (34), das mit dem Scheduler verbunden ist, wobei das Kommunikationsmodul dazu ausgelegt ist, von den zwei oder mehr logischen Servern des Rechenzentrums aktuelle Informationen über das SLO der den zwei oder mehr logischen Servern zugeordneten Instanzen zu empfangen;
wobei der Scheduler (32) dazu ausgelegt ist, für jede Instanz der den zwei oder mehr logischen Servern zugeordneten Instanzen einen Spielraum zwischen den aktuellen Informationen über das SLO und dem jeweiligen geforderten zu bestimmen; einen der zwei oder mehr logischen Server basierend auf den bestimmten Spielräumen der den zwei oder mehr logischen Servern zugeordneten Instanzen zu identifizieren; für mindestens eine Klasse von Instanzen die dem identifizierten logischen Server zugeordneten Instanzen gemäß den bestimmten Spielräumen zu sortieren;
wobei das Kommunikationsmodul (34) ferner dazu ausgelegt ist, eine Anweisung zum Verdrängen einer Instanz, die einen Spielraum aufweist, der größer als jeder andere Spielraum der sortierten Instanzen ist, an den identifizierten logischen Server zu senden;
wobei der Scheduler (32) außerdem dazu ausgelegt ist, dann für die mindestens eine Klasse von Instanzen unter den sortierten Instanzen die Instanz zu bestimmen, die einen Spielraum aufweist, der kleiner als jeder andere Spielraum der sortierten Instanzen ist; und zu bestimmen, ob in dem identifizierten logischen Server verfügbare Ressourcen für die Instanz ausreichen, die den Spielraum aufweist, der kleiner als jeder andere Spielraum der sortierten Instanzen ist;
wobei das Kommunikationsmodul (34) darüber hinaus dazu ausgelegt ist, eine Anweisung zum Zuweisen von Ressourcen in dem identifizierten logischen Server zum Disponieren der Instanz, die den Spielraum aufweist, der kleiner als jeder andere Spielraum der sortierten Instanzen ist, an den identifizierten logischen Server zu senden, wenn die in dem identifizierten logischen Server verfügbaren Ressourcen ausreichen; und
das Kommunikationsmodul (34), wenn die in dem identifizierten logischen Server verfügbaren Ressourcen nicht ausreichen, dazu ausgelegt ist, eine Anweisung zum Verdrängen an den logischen Server zu senden, und der Scheduler (32) ferner dazu ausgelegt ist, für die mindestens eine Klasse von Instanzen die Instanz zu bestimmen, die den Spielraum aufweist, der kleiner als jeder andere Spielraum der sortierten Instanzen in der mindestens einen Klasse ist, und zu bestimmen, ob die in dem identifizierten logischen Server verfügbaren Ressourcen für die Instanz ausreichen, die den Spielraum aufweist, der kleiner als jeder andere Spielraum der sortierten Instanzen ist, um zu ermöglichen, dass eine Anweisung zum Zuweisen von Ressourcen in dem identifizierten logischen Server zum Disponieren der Instanz, die den Spielraum aufweist, der kleiner als jeder andere Spielraum der sortierten Instanzen ist, gesendet wird.

## Revendications

1. Procédé de planification d'instances à exécuter dans deux serveurs logiques ou plus d'un centre de données, dans lequel chaque instance appartient à une classe d'instances, dans lequel chaque classe d'instances est associée à un objectif de niveau de service, SLO, requis, le procédé comprenant :
- la réception (S104, 202), depuis deux serveurs logiques ou plus du centre de données, d'informations actuelles au sujet d'un SLO d'instances attribuées aux deux serveurs logiques ou plus ;
- la détermination (S106, 204), pour chaque instance parmi les instances attribuées aux deux serveurs logiques ou plus, d'une marge entre les informations actuelles au sujet dudit SLO et le SLO requis respectif ;
- l'identification (S108, 206) de l'un desdits deux serveurs logiques ou plus sur la base des marges déterminées des instances attribuées aux deux serveurs logiques ou plus ;
- le tri (S110, 208), pour au moins une classe d'instances, des instances attribuées audit serveur logique identifié en fonction des marges déterminées ;
- l'envoi (S112, 210), au serveur logique identifié, d'une instruction de préemption d'une instance qui présente une marge supérieure à toute autre marge des instances triées ; puis
- parmi les instances triées, la détermination (S118, 212), pour ladite au moins une classe d'instances, de l'instance qui présente une marge inférieure à toute autre marge des instances triées ;
- la détermination (S120, 214) si des ressources disponibles dans le serveur logique identifié sont suffisantes pour l'instance qui présente la marge inférieure à toute autre marge des instances triées ; et
- lorsque les ressources disponibles dans le serveur logique identifié sont suffisantes :
- l'envoi (S124, 216), au serveur logique identifié, d'une instruction d'allocation de ressources dans le serveur logique identifié pour la planification de ladite instance qui présente la marge inférieure à toute autre marge des instances triées ; ou
- lorsque les ressources disponibles dans le serveur logique identifié ne sont pas suffisantes pour l'instance qui présente la marge inférieure à toute autre marge des instances triées :
- la réitération (S122, 218) des actions précédentes d'envoi (S112, 210), de détermination (S118, 212) et de détermination (S120, 214) pour permettre l'envoi (S124, 216) d'une instruction d'allocation de ressources dans le serveur logique identifié pour la planification de l'instance qui présente la marge inférieure à toute autre marge des instances triées.

2. Procédé selon la revendication 1, dans lequel l'envoi (S112, 210) de l'instruction de préemption de l'instance comprend l'envoi d'une instruction de préemption d'une instance pour laquelle le serveur logique a des ressources allouées.

3. Procédé selon la revendication 1 ou 2, dans lequel l'envoi (S112, 210) de l'instruction de préemption de l'instance qui présente une marge supérieure à toute autre marge des instances triées, comprend en outre le placement de ladite instance dans une file d'attente de demandes d'instance en attente d'allocation de ressources.

4. Procédé selon l'une quelconque des revendications 1 à 3, dans lequel les ressources disponibles dans le serveur logique identifié comprennent des ressources autres que les ressources qui ont déjà été allouées à des instances dans le serveur logique identifié.

5. Procédé selon l'une quelconque des revendications 1 à 4, dans lequel le tri (S110, 208) comprend également le tri d'instance appartenant à une classe supérieure et à une classe inférieure d'instances, dans lequel le tri est réalisé en fonction de la marge déterminée des instances, et dans lequel l'envoi (S112, 210) de l'instruction comprend en outre l'envoi d'une instruction de préemption d'une instance appartenant à la classe supérieure lorsque l'instance qui présente une marge supérieure à toute autre marge des instances triées, appartient à la classe supérieure.

6. Procédé selon l'une quelconque des revendications 1 à 5, dans lequel le SLO requis respectif comprend en outre un SLO de décalage de sécurité, selon lequel le risque de violation du SLO requis respectif est réduit.

7. Procédé selon l'une quelconque des revendications 1 à 6, dans lequel le SLO d'une instance comprend une durée depuis la dernière allocation de ressources pour ladite instance.

8. Procédé selon l'une quelconque des revendications 1 à 6, dans lequel le SLO d'une instance comprend une durée à la fin de laquelle l'instance n'atteint pas le SLO.

9. Procédé selon l'une quelconque des revendications 1 à 6, dans lequel le SLO d'une instance comprend une disponibilité de l'instance.

10. Procédé selon la revendication 9, dans lequel la disponibilité de l'instance comprend la durée d'exécution de l'instance dans le serveur logique divisée par la différence entre le temps actuel, si l'exécution continue, ou le temps auquel l'instance a été libérée, et le temps auquel une demande de planification de celle-ci a été reçue par un planificateur.

11. Procédé selon l'une quelconque des revendications 1 à 6, dans lequel le SLO d'une instance comprend une utilisation de cycles de processeur.

12. Procédé selon l'une quelconque des revendications 1 à 11, dans lequel le procédé est déclenché par l'un quelconque parmi : une réception d'une demande de planification d'une instance appartenant à une classe d'instances, une réception d'informations qu'une instance attribuée à l'un desdits deux serveurs logiques ou plus est libérée, un déclenchement périodique, et le fait qu'au moins un SLO requis d'une instance préemptée est sur le point d'être violé.

13. Procédé selon l'une quelconque des revendications 1 à 12, comprenant en outre l'envoi (S102), aux deux serveurs logiques ou plus du centre de données, d'une demande d'informations actuelles au sujet dudit SLO d'instances attribuées aux deux serveurs logiques ou plus.

14. Procédé selon l'une quelconque des revendications 1 à 13, dans lequel des instances comprennent un ou plusieurs parmi : des machines virtuelles, VM, des conteneurs et des processus.

15. Programme informatique configuré, lorsqu'il est exécuté sur un ordinateur, pour réaliser le procédé selon l'une quelconque des revendications précédentes.

16. Produit de programme informatique comprenant un support de stockage lisible par ordinateur et le programme informatique selon la revendication 15, dans lequel le programme informatique est stocké sur le support de stockage lisible par ordinateur.

17. Gestionnaire de ressources (30) capable de planifier des instances à exécuter dans deux serveurs logiques ou plus d'un centre de données lié au gestionnaire de ressources, dans lequel chaque instance appartient à une classe d'instances, dans lequel chaque classe d'instances est associée à un objectif de niveau de service, SLO, requis, le gestionnaire de ressources comprenant :
- un planificateur (32), et
- un module de communication (34) connecté au planificateur, dans lequel le module de communication est adapté pour recevoir, depuis les deux serveurs logiques ou plus du centre de données, des informations actuelles au sujet dudit SLO des instances attribuées aux deux serveurs logiques ou plus ;
dans lequel le planificateur (32) est adapté pour déterminer, pour chaque instance parmi les instances attribuées aux deux serveurs logiques ou plus, une marge entre les informations actuelles au sujet dudit SLO et le SLO requis respectif ; pour identifier l'un desdits deux serveurs logiques ou plus sur la base des marges déterminées des instances attribuées aux deux serveurs logiques ou plus ; trier, pour au moins une classe d'instances, des instances attribuées audit serveur logique identifié en fonction des marges déterminées ;
dans lequel le module de communication (34) est en outre adapté pour envoyer, au serveur logique identifié, une instruction de préemption d'une instance qui présente une marge supérieure à toute autre marge des instances triées ;
dans lequel le planificateur (32) est également adapté pour ensuite déterminer, pour ladite au moins une classe d'instances, parmi les instances triées, l'instance qui présente une marge inférieure à toute autre marge des instances triées ; et déterminer si des ressources disponibles dans le serveur logique identifié sont suffisantes pour l'instance qui présente la marge inférieure à toute autre marge des instances triées ;
dans lequel le module de communication (34) est en outre adapté pour envoyer, au serveur logique identifié, une instruction d'allocation de ressources dans le serveur logique identifié pour la planification de ladite instance qui présente une marge inférieure à toute autre marge des instances triées lorsque les ressources disponibles dans le serveur logique identifié sont suffisantes ; et
lorsque les ressources disponibles dans le serveur logique identifié ne sont pas suffisantes, le module de communication (34) étant adapté pour envoyer, au serveur logique, une instruction de préemption, et le planificateur (32) étant en outre adapté pour déterminer, pour ladite au moins une classe d'instances, l'instance présentant la marge inférieure à toute autre marge des instances triées dans ladite au moins une classe, et déterminer si des ressources disponibles dans le serveur logique identifié sont suffisantes pour l'instance qui présente la marge inférieure à toute autre marge des instances triées, pour permettre d'envoyer une instruction d'allocation de ressources dans le serveur logique identifié pour la planification de ladite instance présentant la marge qui est inférieure à toute autre marge des instances triées.
